Europäisches Patentamt

European Patent Office

Office européen des brevets

(19)

(11) Publication number: 0 351 159
A2

# EUROPEAN PATENT APPLICATION

(21) Application number: 89306967.4

(22) Date of filing: 10.07.89

(51) Int. Cl.⁴: G11B 23/03 , G11B 23/033

(30) Priority: 11.07.88 US 217443

(43) Date of publication of application:
17.01.90 Bulletin 90/03

(84) Designated Contracting States:
DE NL

(71) Applicant: MINNESOTA MINING AND
MANUFACTURING COMPANY
3M Center, P.O. Box 33427
St. Paul, Minnesota 55133(US)

Applicant: SONY CORPORATION
7-35 Kitashinagawa 6-Chome Shinagawa-ku
Tokyo 141(JP)

(72) Inventor: Ohmori, Kiyoshi Minnesota Mining
and
Manufacturing Company 2501 Hudson Road
St. Paul Minnesota 55144-1000(US)
Inventor: Leonard, Vurnen J. Minnesota
Mining and
Manufacturing Company 2501 Hudson Road
St. Paul Minnesota 55144-1000(US)

(74) Representative: Baillie, Iain Cameron et al
c/o Ladas & Parry Isartorplatz 5
D-8000 München 2(DE)

(54) Disk cartridge.

(57) A cartridge (2, 3) enclosing a rotatable recording disk (1) and including a shutter (6) for opening and closing slots (5) in the cartridge (2, 3) providing access to said disk (1) is provided with an internal locking member (7) which releasably engages a projection extending (17) from the shutter (6) to lock the shutter (6) in the closed position.

FIG. 2A

## Disk Cartridge

Background of the Invention


### 1. Field of the Invention


This device relates to a disk cartridge in which recording and playback of a disk are carried out by means of a magnetic head of a disk player, and particular relates to a head insertion opening which is provided in the cartridge and is adapted to be opened and closed by means of a shutter.


### 2. Description of the Prior Art


Present 3-1/2 inch magnetic disks include a disk cartridge which encloses a recording disk, and a shutter movably secured to the cartridge so as to open and close at least a head insertion opening provided in the cartridge.

However, in this cartridge, the shutter can be easily opened when the disk cartridge is not in use, allowing dust to be unintentionally introduced into the disk through the head insertion opening into the cartridge. Furthermore, a finger unintentionally inserted into the cartridge through the head insertion opening tends to smudge the disk. The adhesion of dust or the like to the disk causes a dropout during recording and playback of the disk.

An object of the present invention is to overcome the aforesaid problems, and to provide a disk cartridge in which locking of the shutter at the closed position and guiding of the shutter is performed by a single lock member provided in the cartridge.


Summary of the Invention


The characteristics of the present device are that a disk cartridge in which at least a head insertion opening is provided in a cartridge accommodating a recording and playback disk is adapted to be opened and closed by means of a shutter wherein locking of the shutter at the closed position and the guiding thereof during opening and closing can be carried out by a single lock member provided in the cartridge, whereby the unintentional introduction of dust to the disk in the cartridge is prevented when the disk cartridge is not in use, and the shutter can be smoothly opened and closed.

A disk cartridge according to the present device comprises a projection which is provided on a shutter and extends into a cartridge and a lock member having a lock portion which locks the projection when the shutter is returned to the closed position and a guide groove which guides the projection when the shutter is moved for the purpose of opening and closing.


Brief Description of the Drawings


The novel features and advantages of the present invention will become more apparent to those skilled in the art upon consideration of the following detailed description which refers to the accompanying drawing wherein:

Figure 1 is a partial cross-sectional plan view of the cartridge of the present invention;

Figures 2A and 2B are partial cross-sectional plan views illustrating operation of a shutter of the cartridge of Figure 1;

Figure 3 is an enlarged cross-sectional view taken generally along the line III-III of Figure 1;

Figure 4 is an enlarged cross-sectional view taken generally along the line IV-IV of Figure 1;

Figure 5 is an enlarged cross-sectional view taken generally along the line V-V of Figure 1; and

Figure 6 is a partial cross-sectional plan view illustrating a second embodiment of the present invention.


Description of the Preferred Embodiments


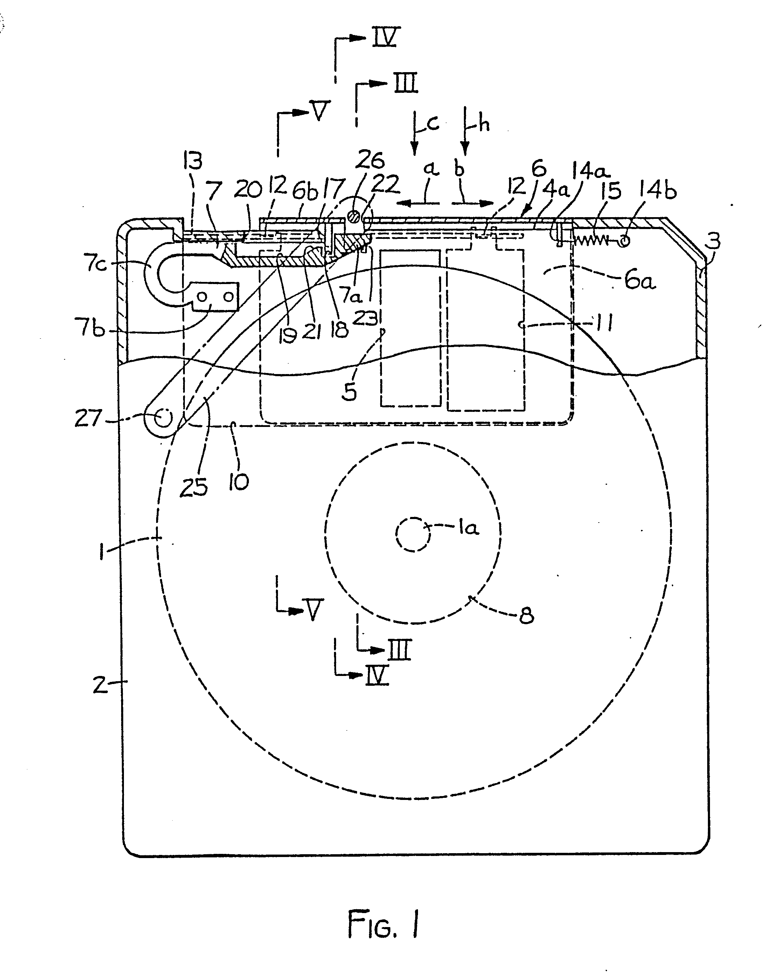

In Figures 1 to 5, a disk cartridge comprises a two-sided magnetic recording and playback disk 1, the cartridge being formed by an upper half 2 and a lower half 3 made of synthetic resin or the like, a shutter 6 which opens and closes simultaneously a pair of upper and lower head insertion openings 5 provided in the upper half 2 and the lower half 3 of the cartridge 4, and a lock member 7 which is secured to the inside portion of the cartridge 4. At the center of the lower half 3 of the cartridge 4 is disposed a disk table insertion opening 8 which provides access to a center hole la of the disk 1.

The two head insertion openings 5 are elongated slots which are centered in a pair of upper and lower recess portions 10 provided in the upper half 2 and the lower half 3 at the side adjacent to the front end 4a of the cartridge 4, and which penetrate the upper half 2 and the lower half 3.

The shutter 6 is formed in a substantially U-shape in cross section and made of a metallic plate such as stainless-steel, a synthetic resin or the like.

The structure is a pair of upper and lower horizontal shutter plates 6a integrally connected by means of a vertical connecting plate 6b which is provided at the front end of the shutter. A pair of upper and lower openings 11 corresponding to both openings 5 are provided under both shutter plates 6a. The shutter 6 is inserted at the front edge 4a of the cartridge 4 and is secured wherein both shutter plates 6a are received by both recess portions 10.

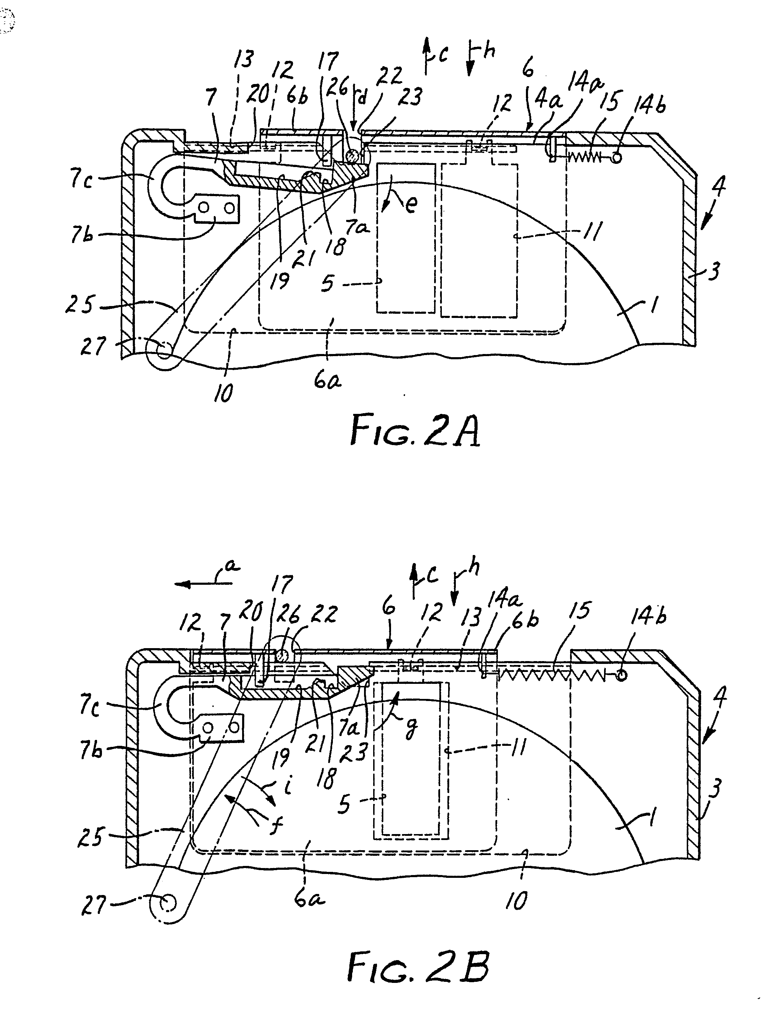

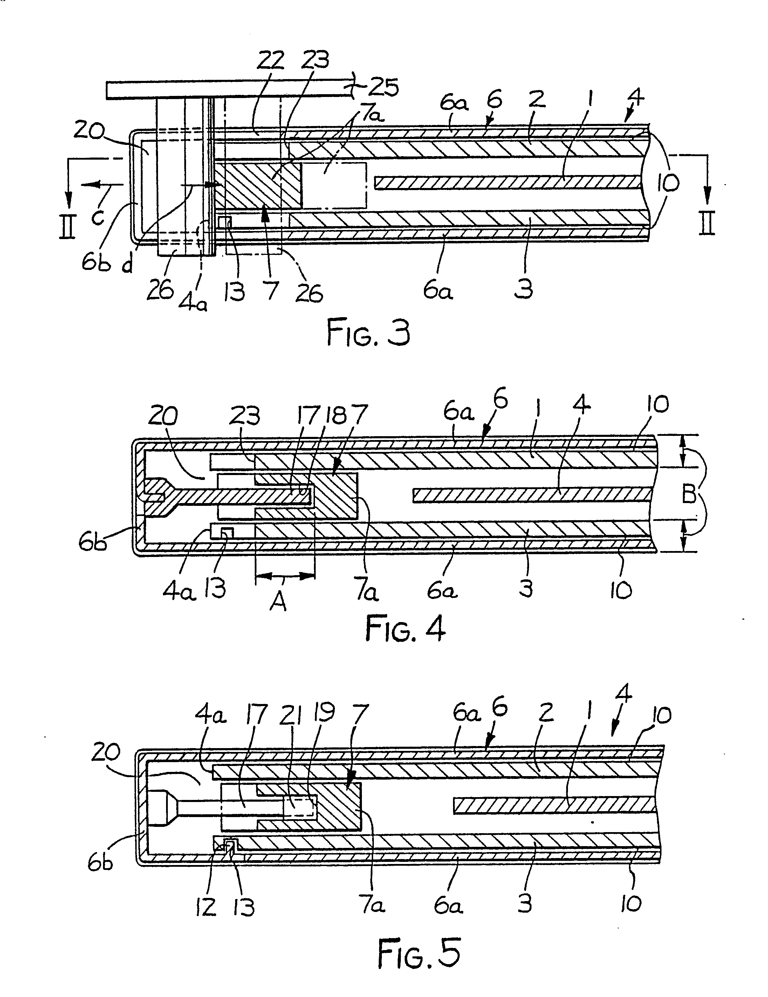

As shown in Figure 5, by guiding a cut projection member 12 provided in a part of the lower shutter plate 6a by means of a shallow guide groove 13 provided in the lower half 3, the shutter 6 is adapted to move between the closed position (both openings 11 are out of register with both openings 5, whereby both openings 5 are closed by both shutter plates 6a) as shown in Figures 1 and 2A and the opening position shown in Figure 2B (both openings 11 are in register with both openings 5 whereby both openings 5 are opened) in directions designated by arrows a and b. The shutter 6 is forced to return to the closed position in the direction designated by the arrow b by means of a return spring 15 which is disposed between a spring securing slot 14a provided on the inside of the connection plate 6b and a spring securing slot 14b provided on the inside of the cartridge 4.

The lock member 7 is formed of synthetic resin or the like, in which a spring action portion 7c curved in the form of a substantially circular arc between a free end 7a and a fixed end 7b is integrally provided. The lock member 7 is fixed to the cartridge 4 at the fixed end 7b. The free end 7a is provided with a lock recess 18 which is formed as a recess and locks a projection 17 provided on the inside of the connection plate 6b of the shutter 6 when the shutter 6 is returned to the closed position. The free end 7a is also provided with a guide groove 19 which guides the projection 17 when the shutter 6 is moved in the directions designated by the arrows a and b during opening and closing.

As illustrated in Figure 4, the projection 17 is inserted deeply into the cartridge 4 through an opening 20. The depth A of the guide groove 19 is large with respect to the thickness B of each of the upper half 2 and the lower half 3. Between the lock recess 18 and the bottom of the guide groove 19 is provided a slanted surface 21. A cutout 22 is provided in the shutter 6 at the position between the connection plate 6b and both shutter plates 6a. When the shutter 6 is returned to the closed position, the tip of the free end 7a of the lock member 7 can be disposed inside the cutout 22. When the shutter 6 is returned to the closed position, a cutout 23 provided at the front end 4a of the cartridge 4 is adapted to be brought into registry with the cutout 22 of the shutter 6.

The structure of the disk cartridge when the disk cartridge is not in use is shown in Figure 1, wherein the shutter 6 is returned to the closed position by means of the return spring 15, and both openings 5 are closed by both shutter plates 6a. In this closed state, the projection 17 of the shutter 6 is secured by the lock portion 18 of the lock member 7, and the shutter 6 is locked at the closed position. Therefore, when the disk cartridge is not in use, the shutter 6 cannot be moved in the opening direction (the direction designated by the arrow a) unless the aforesaid lock 7 is released.

When the disk cartridge is inserted into a disk player (not shown), the disk cartridge is inserted into the disk player in the direction designated by an arrow c as shown in Figures 1 to 3.

When the disk cartridge is inserted, a shutter opening and closing pin 26 which is disposed at the tip of a shutter opening and closing lever 25 provided in the disk player is, as shown in Figure 2A, inserted into the cutout 22 of the shutter 6 from the direction designated by an arrow d. By insertion of the shutter opening and closing pin 26, the free end 7a of the lock member 7 is pushed, and the free end 7a is deflected in the direction designated by an arrow e against the spring force produced by the spring action portion 7c. As a result, the lock portion 18 is released from the projection 17 of the shutter 6, whereby locking of the shutter 6 is released.

The continued insertion of the disk cartridge in the direction designated by the arrow c causes, as shown in Figure 2B, the shutter opening and closing pin 26 to move onto the front end 4a of the cutout 23 of the cartridge 4, whereby the shutter opening and closing lever 25 is rotated in the direction designated by an arrow f relative to a supporting pin 27. By movement of the shutter opening and closing pin 26, the shutter 6 is moved from the closed position to the open position against the return spring 15 in the direction designated by the arrow a.

At this time, the free end 7a of the lock member 7 is returned in the direction designated by an arrow g by spring force of the spring action portion 7c, and the projection 17 which had been driven over the slanted surface 21 is simultaneously guided by the guide groove 19 in the direction designated by the arrow a.

When the shutter 6 is moved to the open position, both openings 5 are in register with both openings 11. Then, the disk 1 is mounted onto a disk table (not shown) which is inserted into the opening 8, and a pair of upper and lower heads (not shown) are simultaneously inserted into both openings 5. Thereafter, the disk 1 is driven and rotated in the cartridge by the disk table, and the upper and lower recording surfaces of the disk 1 are selectively recorded or played by means of the heads.

After the recording or playing of the disk 1 has been completed, removal of the disk cartridge from the disk player in the direction designated by an arrow h, causes the shutter opening and closing lever 25 to rotate in the direction designated by an arrow i. As a result, the shutter 6 is returned to the direction designated by the arrow b by means of the return spring 15. At this time, the projection 17 is guided by the guide groove 19, and the projection 17 enters into the lock portion 18 after riding over the slanted surface 21 immediately before the shutter 6 is returned to the closed position shown in Figure 1.

Therefore, when the shutter 6 is opened and closed (when moved in the directions designated by the arrows a and b), the projection 17 is guided by the guide groove 19 which has a sufficiently large depth A to eliminate instability during opening and closing of the shutter, and consequently the shutter 6 can be smoothly opened and closed.

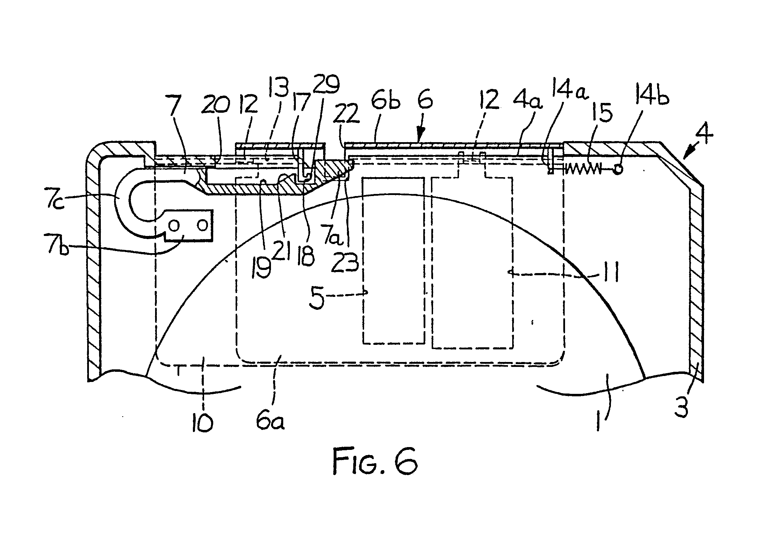

As shown in Figure 6, it is possible to provide a bent portion 29 at the tip of the projection 17 so as to realize smooth movement of the projection 17 through the guide grove 19. The shutter 6 and the projection 17 may be easily formed in this manner if molded of synthetic resin.

Although only two embodiments of the present device have been described, this invention is not limited to the embodiments described above, and various changes or modifications within the scope of the invention are possible.

For example, the lock member 7 is not limited to the described one made of synthetic resin, as it may be journaled relative to the cartridge 4, and biased by a return spring in the direction of the arrow g in Figures 2B.

Although only the head insertion opening 5 is opened and closed by the shutter 6 in the described embodiments, the head insertion opening 5 and the disk table insertion opening 8 may be simultaneously opened and closed by the shutter 6.

Claims

1. A disk cartridge (2, 3) adapted for enclosing a recording disk (1), including head insertion slots (5) for providing access to said disk (1) through said cartridge (2, 3) and a shutter (6) movably secured to said cartridge (2, 3) for sliding movement between an open position and a closed position for the purpose of opening and closing at least the head insertion slots (5), respectively, comprising:

a projection (17) on said shutter (6) extending into said cartridge (2, 3);
means (7) for releasably engaging said shutter projection (17) when said shutter (6) is in said closed position to lock said shutter (6) in said closed position.

2. A disk cartridge (2, 3) according to claim 1 wherein said means for releasably engaging said shutter projection comprises a lock member (7) attached to said cartridge (2, 3) and resiliently biased toward said shutter projection (17), said lock member (7) including a recess (18) adapted to engage said shutter projection (17) when said shutter (6) is in said closed position.

3. A disk cartridge (2, 3) according to claim 2 wherein said lock member (7) further includes a groove (19) adjacent said recess (18) to accommodate said shutter projection (17) during movement of said shutter (6) between said open position and said closed position to stabilize said shutter (6) during said movement.

4. A disk cartridge (2, 3) according to claim 3 further including a shoulder (21) disposed between said groove (19) and said recess (18) to contact said shutter projection (17) and cause movement of said lock member (7) away from said shutter projection (17) as said shutter (6) moves from said open position toward said closed position.

5. A disk cartridge (2, 3) according to claim 4 wherein said lock member shoulder (21) includes a slanted surface extending into said groove (19) to provide a camming operation between said shutter projection (17) and said lock member (7) to facilitate said movement of said lock member (7) away from said shutter projection (17) in response to said movement of said shutter (6) from said open position to said closed position.

6. A disk cartridge (2, 3) acoording to claim 2 wherein said lock member (7) is formed of a resiliently deformable material and includes an end (7b) rigidly attached to said cartridge (2, 3).

FIG. 1

FIG. 2A

FIG. 2B

FIG. 3

FIG. 4

FIG. 5

FIG. 6